# EUROPEAN PATENT SPECIFICATION

(11) **EP 1 884 090 B1**
(45) Date of publication and mention of the grant of the patent: **13.08.2014**
(21) Application number: 05748538.5
(22) Date of filing: 27.05.2005
(51) Int. Cl.: H04W 88/14, H04M 7/00

(54) **LOCAL SWITCHING IN RADIO ACCESS NETWORKS**
LOKALE VERMITTLUNG IN FUNKZUGANGSNETZEN
COMMUTATION LOCALE DANS DES RESEAUX D'ACCES RADIO

(43) Date of publication of application: 06.02.2008
(73) Proprietor: Telefonaktiebolaget L M Ericsson (publ), 164 83 Stockholm (SE)
(72) Inventor: WALDAU, Clemens, S-141 30 Huddinge (SE); VÄLME, Niclas, S-164 43 Kista (SE)
(74) Representative: HOFFMANN EITLE
(86) International application number: PCT/SE2005/000809
(87) International publication number: WO 2006/126923

(56) References cited:
- WO-A1-2005/107198
- WO-A2-01/65808
- WO-A2-01/89147
- WO-A2-03/041426
- US-A1- 2005 105 559

## Description

### TECHNICAL FIELD OF THE INVENTION

Generally the invention relates to a method and nodes for local switching in a radio access network (RAN). In particular the invention relates to decentralise circuit switched (CS )services from a central switching node, commonly known as the mobile switching centre (MSC), to one or more local switching nodes so as to provide for local switching of calls.

Local switching may take place in a radio base station (RBS), in a radio base station aggregation site or in the access gateway to the radio access network, for example in a GSM base station controller (BSC), in a radio network controller (RNC) of a WCDMA radio access network, or in a 4G bearer gateway to a 3G cellular system.

### DESCRIPTION OF RELATED ART

In cellular systems of the first and second and third generation switching of voice calls and user data take place in a central mobile switching centre node MSC which interacts with the PSTN or ISDN network.

### BACKGROUND OF THE INVENTION

The invention presupposes a layered protocol architecture of the radio access network, wherein a user plane used for transport of user data is separated from a control plane used for transport of control data controlling a call. The architecture makes it possible to handle call control independently of user data streams.

The present invention presupposes some knowledge of the basic architecture of the 3GPP architecture. In this architecture UMTS networks are used.

UMTS networks are designed for flexible delivery of any type of service. Logically a UMTS network is divided into a radio access network, UTRAN, and a core network, CN, over a standardised interface lu. UTRAN is a complete access network based on a radio access technology WCDMA and its main purpose is to facilitate the communication between the user equipment UE and the core network. In the 3G standard a UE has an Uu interface with radio access network. The protocols over the lu and Uu interfaces are divided into two planes: user plane protocols for carrying user data through the network and control plane protocols for controlling the services and the connections, handover, location update, SMS and other functions.

As complement to UTRAN other radio access networks may be used such as a GSM network and a GERAN network which is a GSM network that supports EDGE, which provide high speed data services.

The UMTS core network can be described as an evolution of the GSM and the GPRS core networks. It can be divided into two domains: the circuit service (CS) domain and the packet service (PS) domain. The CS domain is based on the GSM network elements MSC and GMSC which can handle circuit switched telephony and video services. The PS domain is based on the GPRS network elements SGSN and GGSN which can handle packet switched bearer services.

The protocol used on the circuit domain control plane is the RANAP protocol. RANAP is used between the MSC and UTRAN for: call handling, UMTS mobility management such as roaming, handover and paging, and radio bearer control.

To-day the transport layer is typically using ATM technology supporting AAL2.

Below some of the main nodes in the core network are described:
The MSC is split into two functional elements one operating in the control plane and the other operating in the user plane. The first is referred to as MSC server and the latter is referred to as Media Gateway function (MGW).

The MSC server is a signalling element that provides the call control (CC) and mobility control functionality of the MSC. The MSC server sets up and manages the mobile originated and mobile terminated calls over the CS domain. It terminates the user-network signalling and translates it into the relevant network-to-network signalling. The MSC server also contains a VLR, which maintains subscription data and CAMEL related data.

The Media Gateway funcion (MGW) is a function in the user plane that handles the interworking with PSTN or ISDN: The MGW typically terminates bearer channels from an external circuit-switched network and media streams from a packet-switched network (e.g. RTP/UDP/IP streams) and bridges these bearer channels through media conversion, bearer control and payload processing. The MGW interacts with MSC server and GSMC server for resource control by using the H.248 protocol. The MGW includes the necessary resources for supporting UMTS/GSM transport media.

Each UE connected to UTRAN is served by a specific Radio Network Controller RNC, which is called the Serving RNC (SRNC). The SRNC controls the signalling connection between the UE and the UTRAN and it also controls the signalling in the Iu signalling connection for this UE. The RNC that controls a specific set of UTRAN access points, i.e. one or more Node-Bs, serves as the Controlling RNC (CRNC) for these nodes. The SRNC and CRNC may or may not be implemented in the same RNC node.

The existing layered architecture of the core network comprises a control plane and user plane. One problem in consequence of this is that the switching and service capabilities is centralised to some few sites each one providing services to a large population. Typically an MSC and MGW combination serves a population of several millions of subscribers.

Statistics show that up to about 80% of the calls are local voice calls.

This presents a problem, for example in a large area territory with few cities in the million inhabitant range. One MSC is sufficient to serve all of the territory and all calls are directed to the central MSC, even the local calls of Lhe individual cities. Both legs of a local call are inter-connected in the remote MSC. This is known as the "trombone" effect. Since the two legs of a local call are long, local calls are expensive having regard to the network resources they require for the transport of the legs.

A solution to this problem would be to place an MSC in each of the cities and let the MSC switch the local inter-city calls as well as the long distance calls. This solution is however not feasible from economic point of view, since an MSC is expensive and is not easy to scale down to adapt to the amount of traffic generated in the city it serves.

In addition to the above, there is known from WO 03/041426 a so-called community gateway support node comprising switch means and which is geographically separated from the central MGW (public GSM). However, the respective teaching - amongst others - does not consider local calls in the sense of the present invention.

### SUMMARY OF THE INVENTION

One object of the invention is to provide a method and system for local switching in a base station, a in base station aggregation site, in an access gateway, such as a BSC in a GSM RAN or an RNC in a UTRAN system or in a 4G bearer gateway.

The mentioned object and problems are solved by the subject-matter of the independent claims. Further preferred embodiments are defined in the dependent claims.

This is achieved by providing the local switching nodes, called local media gateways (LMGWs), with functionality for switching and for accessing the PSTN/ISDN network. A central MSC selects appropriate LMGW for switching of the call. Between the selected LMGW and the MSC control signalling takes place on the control plane and instructions for set-up, maintenance and tear-down of calls takes place are exchanged on the control plane. The control plane is thus terminated by the MSC. In the LMGW the two call legs are interconnected. All user data, such as voice and low bit rate date, are exchanged on the user plane and should in the general case not be terminated by the MSC.

A core network site in accordance with the invention comprises a MSC and a MGW and such a site has all functionality and all hardware required for call connection handling, such as switches, transcoders, interworking units

(IWUs), tone senders, conference bridges, PSTN/ISDN-interfaces and all software required for call connection handling. It also has software for control of local MGWs.

A local MGW in accordance with the invention can optionally be provided with a limited set of call connection capabilities and include a local switch and an interface to the PSTN/ISDN network. This allows for scalability and reduces consts. Should a local call require functionality not present in the LMGW the LMGW transfers the local call to the MSC. In case a hierarchical structure of switching nodes are used the call is transferred to the switching node at the next higher hierarchical level.

### BRIEF DESCRIPTION OF THE DRAWINGS

- Fig. 1A: is a schematic net view illustrating how local calls are switched to-day,
- Fig. 1 B: is a schematic net view illustrating local switching in an RNC node in accordance with one embodiment of the invention,
- Fig. 1 C: is a schematic net view illustrating local switching in an RBS aggregation site in accordance with another embodiment of the invention,
- Fig. 1 D: is a schematic net view illustrating local switching in an RBS node in accordance with a further another embodiment of the invention,
- Fig. 2: is a detailed net view of three different RANs connected to a core network and local switching is provided in a radio network controlling node in the respective RANs similar to Fig. 1B,
- Fig. 3: is a detailed network view illustrating local switching in an RBS aggregation site,
- Fig. 4: is a detailed network view illustrating local switching in an RBS similar to FIG. 1D,
- Fig. 5: is a detailed network view of the protocol stacks used in the embodiment shown in FIG. 2,
- Fig. 6: is a signalling diagram associated with the embodiment shown in Fig. 2
- Fig. 7: is a block schema of a local media gateway (MGW) in accordance with the invention,
- Fig. 8: is a block schema of a mobile switching centre (MSC) in accordance with the invention,
- Fig. 9: is a block schema of a radio network controller (RNC)or a radio base station controller (BSC) in accordance with the invention, and
- Fig. 10: is a block schema of a central media gateway (MGW) in accordance with the invention.

### DETAILED DESCRIPTION OF EMBODIMENTS

Like reference numerals designate like or corresponding elements among the several views. Further all control signalling on the control plane is indicated with bold dashed lines and bold dashed arrows among the drawings. Also, all circuit switched connections on the user plane are indicated with bold lines and bold arrows.

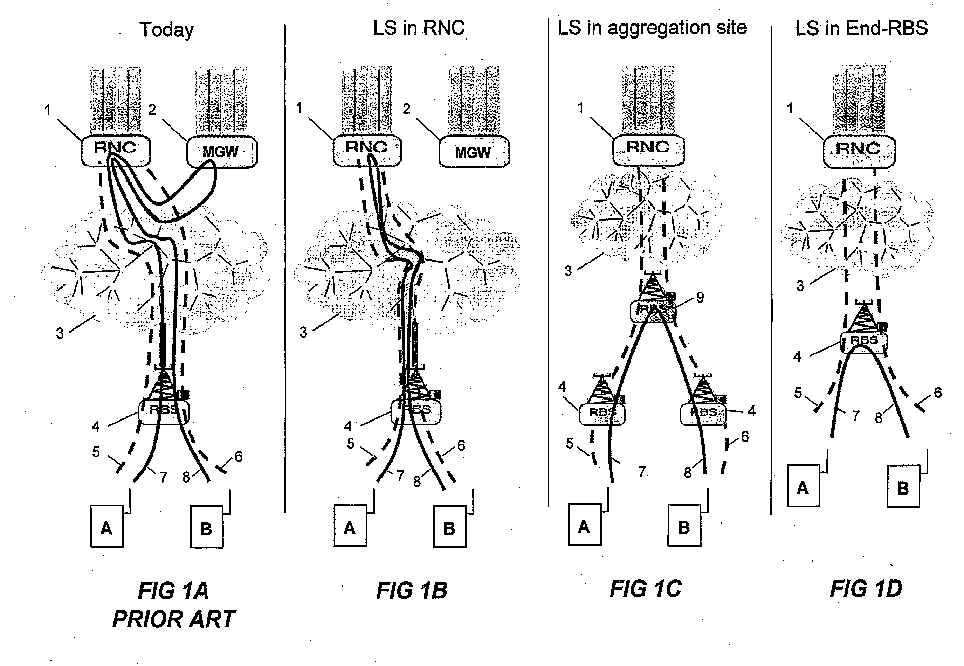

In Fig. 1A a conventional method of switching local calls in a radio access network is disclosed. In Fig. 1a there is shown a RNC 1 and a MGW 2 in a core network 3. A RBS 4 in a cellular RAN, for example UTRAN, serves a cell wherein there is mobile stations A and B. Switching of calls takes place in the MGW and all call control takes place in the MSC which is assisted by the RAN. The MGW has connections to PSTN and ISDN.

Mobile station A sends a call request RBS and indicates therein the mobile telephone number to B. In response to the call request a signalling connection 5 shown with dashed lines is set up between A and RNC. Another signalling connection 6 is thereby also set up between the RNC and mobile station B. Over the signalling connection call control messages, such as call set-up and tear-down, are exchanged. In response to the call request a first leg 7 of a circuit switched (CS) connection is set up from A to MGW via RNC. Provided B answers the call a second leg 8 of a CS connection is set up from MGW to B via RNC. The two call legs are interconnected in MGW and A and B can communicate, for example talk and/or exchange user data.

Geographically the MGW is located centrally in an area populated by millions of people, and typically serves a plurality of RNCs distributed in said area. The geographical distance between an RNC and MGW varies according to individual circumstances and may be in the order of several hundreds of kilometres. The distance between an RNC and the RBSs it serves is typically less than the RNC-MGW distance. Typically an RBS serves a cell and the distance between cells varies according to local geography and population within the cell. Typically a cell has a size of some few kilometres.

For the local call in accordance with conventional art it is apparent that the CS connection requires network resources all the way along from the RBS to the MGW. Such network resources are typically links, local switches etc., resources that are expensive.

It is expensive to build a complete standard, fully fledged telecommunication infrastructure. A telecommunication system built like this needs to have a capacity that can stand peak loads. The transport of local calls all the way from the RBS to the MGW is expensive.

If a telecommunication system is to be extended in a less developed country, that already has a less developed telecommunication infrastructure it would be very expensive to enlarge the telecommunication system using a traditional full-fledged telecommunication infrastructure.

In a scenario.wherein it is desired to optimize the telecommunication system with regard to the fact that up to about 80% of the calls are local calls, and with regard to the fact that transport of calls are expensive, great savings could be achieved if the traditional full-fledged infrastructure of a telecommunication system is abandoned and local switching in accordance with the invention is implemented.

An advantage achieved in using local switching in accordance with the invention is that dimensioning for peak loads need only be made in local areas of the system, that is the areas wherein the local calls take place. It would not be necessary to dimension all areas of the system for peak load of the system, as would be the case if the system was built as with a traditional fully-fledged infrastructure.

In order to make better use of network resources the present invention provides for local switching of local calls in that the two call legs of a CS connection are interconnected in network nodes that are closer to the cell that serves A and B.

In Fig. 1B the local switching has been moved from the MGW to the RNC thereby reducing the resources needed for a local call. The MGW still has the switching functionality similar to the one in the MGW in Fig. 1A. Also all the major part of the UTRAN network control functionality is located in the RNC. The novelty feature provided in Fig. 1B is that the RNC has been provided with switching functionality for switching of local calls and optionally may be provided with functionality for switching of calls to/from the PSTN and/or ISDN. The signalling connections 5, 6 are the same as in Fig. 1A while the CS connections 7, 8 are interconnected in the RNC instead of the MGW and are shorter than in Fig. 1A.

In Fig. 1C the local switching has been moved further down in the RAN and will now take place in a base station aggregation site 9. This site is common to a number of underlying radio base stations RBSs. The MGW still has the switching functionality similar to the one in the MGW in Fig. 1A. Also the major part of the UTRAN network control functionality is located in the RNC. The novelty feature provided in Fig 1C is that the base station aggregation site has been provided with switching functionality for switching of local calls and optionally may be provided with functionality for switching of calls to/from the PSTN and/or ISDN. The signalling connections 5, 6 are the same as in Fig. 1A while the CS connections 7, 8 are interconnected in the base station aggregation site instead of in the MGW and are substantially shorter than in Fig. 1A.

In Fig. 1D the local switching has been moved further down in the RAN and will now take place in a RBS. The MGW still has the switching functionality similar to the one in the MGW in Fig. 1A. Also the major part of the UTRAN network control functionality is located in the RNC. The novelty feature provided in Fig 1C is that the base station aggregation site has been provided with switching functionality for switching of local calls and optionally may be provided with functionality for switching of calls to/from the PSTN and/or ISDN. The signalling connections 5, 6 are the same as in Fig. 1A while the CS connections 7, 8 are interconnected in a local RBS instead of in the central MGW and are substantially shorter than in Fig. 1A.

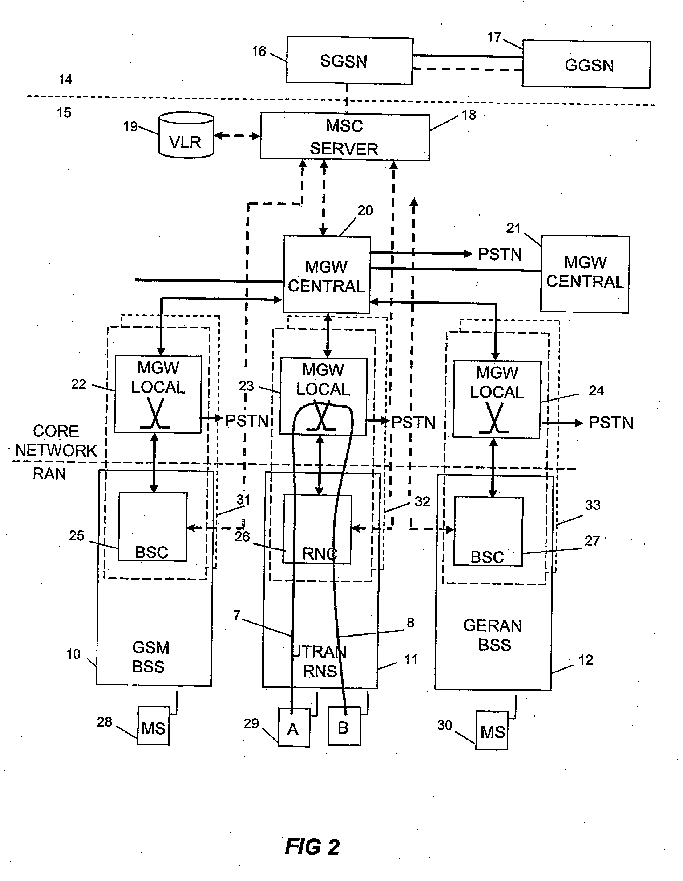

In Fig. 2 there is shown three RANs, a GSM base station sub-system (BSS) 10, a UTRAN radio network sub-system (RNS) 11 and a GSM-EDGE (GERAN base sub system (BSS) 12 all connected to a 3GPP core network 13. The GSM BSS system and the GERAN BSS system are connected to the core network over a respective, conventional A-interface and the UTRAN BBS is connected to the core network over the conventional lu-cs interface. The core network is divided into a packet switched (PS)domain 14 and a CS domain 15. In the PS domain there is a SGSN server 16 connected to a GGSN server 18. There are also other conventional nodes in the PS domain but these will not be described. The SGSN node communicates with a central MSC server 18 in the CS domain over a conventional Gs interface. The MSC server communicates with a VLR 19 over the conventional B interface and with a central MGW 20 over the conventional Mc interface. The MGW 20 communicates with other central MGWs 21 over the conventional Nb interface and with a plurality of local MGWs 22-24 over respective interfaces Nb. MGW 22 is located in the GSM BSS, MGW 23 is located in the UTRAN RNS and MGW 24 is located in the GERAN BSS. In accordance with the invention each of the local MGWs 22-24 comprises switching functionality for switching of local calls and may optionally be provided with functionality for switching of calls to/from PSTN. Local MGW 22 communicates with a BSC 25 in GSM BSSover interface, local MGW 23 communicates with an RNC 26 in the UTRAN RNS over the interface lu-CS, and local MGW 24 communicates with a BSC 27 in GERAN BSS in a similar way as the UTRAN RNS..

A mobile station (MS) 28 accesses GSM BSS over the conventional Um interface, a MS 29 accesses UTRAN RNS over the conventional Uu interface, and a MS 30 accesses GERAN BSS over the conventional enhanced Um interface. MS 29 may be a dual type MS which can connect to UTRAN RNS as well as to GSM BSS. It may even be a triple type MS which can connect to each of the RANs 10-12. The same goes for the MSs 28 and 30, each one may connect to either one or both of the remaining RANs.

In a preferred embodiment of the invention the local MGW 22 is co-located with BSC 25, MGW 23 is co-located with RNC 26 and MGW 24 is co-located with BSC 27. Colocation means the units physically sit in the same rack or cabinet or sit in the same room or house.

Typically each GSM BSS 10 comprises several BSCs each one co-located with a respective local MGW as is indicated by the dashed rectangles 31. Each such colocated MGW-BSC pair is connected to the central MGW. In a similar manner UTRAN RNS 11 comprises several RNCs each one co-located with a respective local MGW as is indicated by the dashed rectangles 32. Each such co-located MGW-comprises several BSCs each one co-located with a respective local MGW as is indicated by the dashed rectangles 33. Each such co-located MGW-BSC pair is also connected to the central MGW.

In a 3GPP network the lub, lur and lu interfaces has a protocol architecture comprising a number of vertical and horizontal layers. These layers are logically independent from each other and this accounts for a highly modular and expandable architecture. Each layer can be evolved independently from the rest of the layers. In the horizontal direction there is a radio-network layer and a transport-network layer. All UTRAN-specific issues are handled by the radio network layer. The transport network layer as based on standard transport technology, such as ATM and IP. In the vertical direction there are two main planes, the control plane and the user plane, both extending across the radio-network layer and the transport-network layer. The control plane contains a UTRAN signalling protocol, such as RANAP, RNSAP, or NBAP and an associated transport mechanism for the transport of the signalling messages between the UTRAN nodes. As discussed above UTRAN signalling protocols are used for setting up data transports, also called data bearers, in the radio-network layer. The user plane contains a UTRAN protocol that deal with user-specific data and an associated transport mechanism for the transport of the user-specific data between UTRAN nodes. Typical UTRAN protocols that deal with user-specific data or user-specific data streams include the MAC protocol and the radio link protocol (RLC).

The MSC server is a conventional signalling element in that it provides call control (CC) and mobility control functionality for users of the network. The MSC server sets up and manages the mobile originated and mobile terminated calls over the CS domain. It terminates user signalling and translates it into the relevant network-to-network signalling.

Main difference between a MSC and a switch in a fixed network is that the MSC performs additional functions such as functions for radio resource allocation and for mobility management. For providing service mobility the MSC supports procedures for location registration and procedures for handover.

Novel functionality included in the MSC server in accordance with the invention relates to selection, among the local MGWs, of the local MGW that is best suited for handling a call. Software and control signalling associated with this is included in the present invention, such as allocation of local MGW and transfer of the called subscriber's number (generally referred to as the B-number) to the selected local MGW. At the initial call request at MS A described above the MSC selects the most applicable MGW located closest to the access gateway, that is any of the MGW-BSC pairs 31, 33 or any of the MGW-RNC pairs 32.

Further, the MSC server will also inform a radio access gateway, such as a BSC or RNC, to which local MGW the call should be routed. In case the radio access gateway is a UTRAN RNC this will be handled over the lu-cs control plane and the RANAP protocol. In case it is a GSM BSC this will be handled over the A-interface.

The VLR maintains subscription data and other data.

The MGW handles the interworking with PSTN. The MGW typically terminates bearer channels from an external circuit-switched network, such as PSTN or ISDN, and media streams from a packet-switched network (e.g. RTP/UDP/IP streams) and bridges these bearer channels through media conversion, bearer control and payload processing. The MGW interacts with MSC server for resource control by using the H.248 protocol. The MGW includes the necessary resources for supporting UMTS/GSM transport media. The MGW comprises all hardware and software for switching of calls and data. Examples hardware resident in the MGW are: a switch, transcoders, conference bridges, IWUs, synchronisation, tone senders, POI interfaces.

An IWU is an inter working unit that provides the required functionality for inter working with the fixed networks such as ISDN, PSTN and PDNs (packet data networks).

A POI is a point of interconnection to an external PS or CS network and comprises an interface. Generally it is implemented in an IWU.

A local MGW comprises supports a restricted number of services. In a preferred embodiment it comprises only functionality that supports connection handling of circuit switched end user services such as voice and circuit switched data. A local MGW may optionally comprise functionality for supporting services in the PSTN or ISDN networks and comprises an IWU. It may also have a POI. A switch may be embodied by a router if IP based transport is used. Other transport services may user other types of switches. If ATM technology is used virtual path or cross connects switches and virtual connection switches may be used. Other examples of switches are time division multiplex switches.

An MGW may be seen as a resource used by the MSC server and the RNC for switching of local calls. Control logic for this switching is located in the RNC and the MSC server. The control logic in the MSC server and the RNC exchange control signals and decide the path which the user plane shall follow. Once the path has been decided either the MSC server or the RNC or both signal an order to the MGW to reserve a port and a channel for the respective legs of a connection, that is for the respective user planes. One of the two user planes of a call extends between A and local MGW 23, and the other between B and local MGW 23. In the local MGW the two user planes are interconnected as is illustrated by the broad line referenced 7, 8.

In Fig. 2 the user planes are terminated in the MGW, while the control plane is terminated in the access gateways, i.e.a BSC or RNC and in the MSC server. The GGSN node is a network element in the PS domain that serves as a gateway providing connectivity to external packet data networks (PDNs). It is typically an IP router implementing additional functions for supporting mobile services.

The SGSN node is a key network element in the PS domain that provides the PS-related control- and user-plane functions. It stores two types of subscriber data for handling originating and terminating data packet transfers: the GPRS mobility management (GMM) information and the session management (SM) information.

The signalling between a MS and the MSC server for set-up of a call will be described further down.

In case a call has been set-up and an end user invokes a service that is not supported in the local MGW the MSC server will set up a new connection in the central MGW and order the access gateway, i.e. the RNC or the BSC, to redirect the user data flow from the access gateway towards the central MGW instead of the local MGW. The MSC server will thereby also tear down the earlier CS connection and release the earlier used connection resources in the local MGW since these are no longer needed.

In this case the two legs of a CS connection associated with a local call between mobile stations A and B in UTRAN RNS will thus be inter-connected in the central MGW 20 in Fig. 2.

In case traffic load is high and load sharing becomes necessary the MSC server orders the access gateway to connect the user data flow to the central MGW.

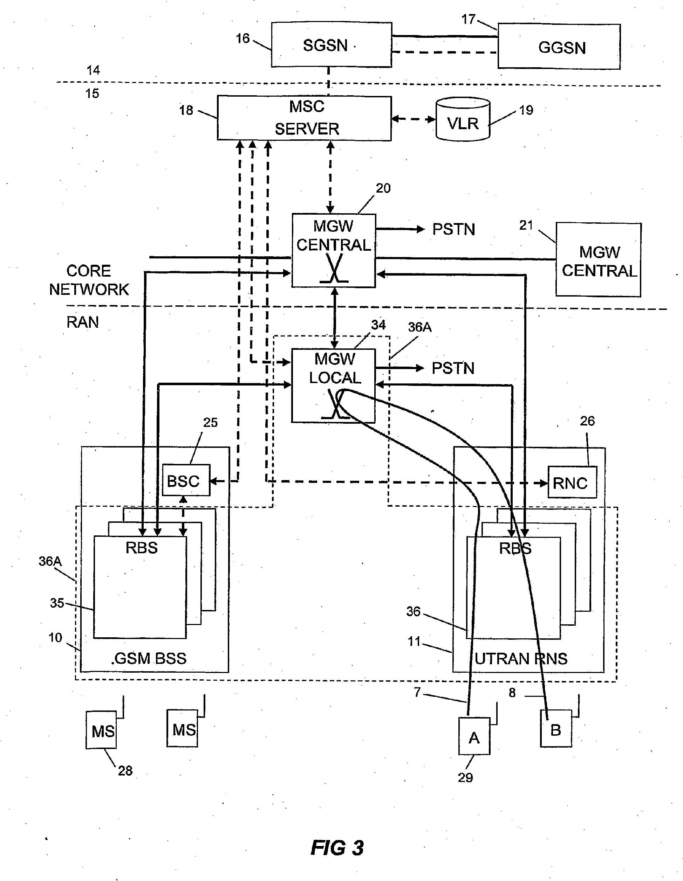

Fig. 3 illustrates an embodiment similar to Fig. 1C wherein local switching has been moved from the access gateway, that is the RNC 26 combined with the local MGW 23, in Fig. 2 down to a base station aggregation site 34 embodied by a local MGW 34. In Fig. 3 the GERAN RAN has been omitted for clarity reasons The base station aggregation site communicates with a plurality of radio base stations RBSs 35 in GSM BSS and RBSs 36 in the UTRAN RNS, as exemplified by the many rectangles.

The base station aggregation site has similar functionality as the local MGWs of Fig. 2, and supports a restricted number of services. In a preferred embodiment it comprises functionality that supports connection handling of circuit switched end user services such as voice and circuit switched data. The base station aggregation site comprises functionality for supporting services in the PSTN or ISDN networks and comprises an IWU. It also has a POI. Also in this embodiment packet switched data is preferably transported to the SGSN node in the PS domain.

For a local call between A and B in Fig. 3 control signalling takes place between the RNC 26 and the MSC server. Control logic for switching of local calls is located in the RNC 26 and the MSC server 18. Also in this embodiment control logic in the MSC server and in the RNC exchange control signals and decide the path which the user plane shall follow. Once the path has been decided either one of the MSC server and the RNC signals an order to the base station aggregation site 34, i.e. the local MGW, to reserve a port and a channel for the respective user planes.

For a local call between A and B one user plane extends between A and the base station aggregation site 34 and the other user plane extends between B and base station aggregation site 34. In the base station aggregation site the user planes are interconnected as illustrated.

In case a call has been set-up and an end user invokes a service that is not supported in the base station aggregation site the MSC server will set up a new connection in the central MGW and order the access gateway, i.e. the RNC or the BSC, to redirect the user data flow from the access gateway towards the central MGW instead of the local MGW. The MSC server will thereby also tear down the earlier CS connection and release the earlier used connection resources in the local MGW since these are no longer needed.

In this case the two legs of a CS connection associated with a local call between mobile stations A and B in UTRAN RNS will thus be inter-connected in the central MGW 20 in Fig. 3.

In Fig. 3 the user planes are terminated in MGW 34, while the control plane is terminated in the access gateways, i.e in .BSC 25 or RNC 26 and in the MSC server 18. A dahed rectangle 36A illustrates that the base station aggregation site 34 interacts with radio base stations 35, 36 and in some sense is located at a higher level than these. The RNC in its turn is located at a higer level than the base station aggregation site.

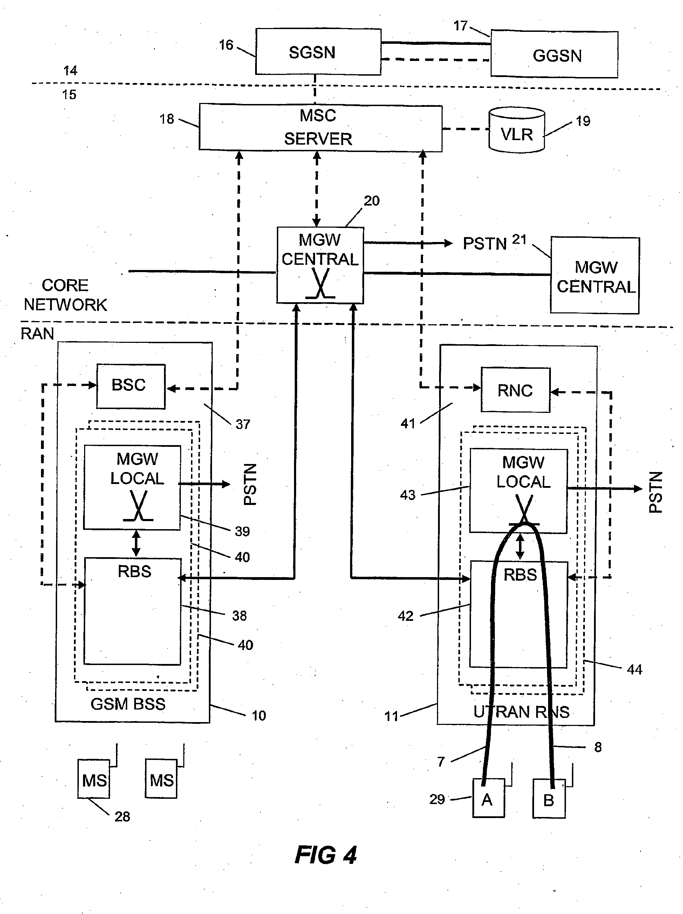

Fig. 4 relates to en embodiment of the invention wherein local switching takes place in the radio base stations similar to what is shown in Fig. 1D. In Fig. 4 the GERAN RAN has been omitted for clarity reasons.

In Fig. 4 a BSC server 37 controls a plurality of RBSs in the GSM BSS. Only one RBS, referenced at 38, is shown for clarity reasons. A local MGW 39 provided with switching functionality is co-located with the RBS as is indicated by the dashed rectangle 40. It should be understood there are many such co-located MGW-RBS pairs 40 each one of which is controlled by the BSC server.

In the UTRAN RNS there is an RNC 41 which controls a plurality of RBSs ocf which only one, referenced at 42, is shown. A local MGW 43 provided with switching functionality is co-located with the RBS as is indicated by the dashed rectangle 44. It should be understood there are many such co-located MGW-RBS pairs 44 each one of which is controlled by the RNC.

Like the Fig. 2 and 3 embodiments the central MGW 20 is a fully fledged MGW with all functionality required for voice and user data services (AV and UDI respectively), while the local MGWs 39, 43 only have limited functionality for switching. Further they both have a point of interconnection (POI) to the fixed networks PSTN and/or ISDN. Examples of such restricted functionality are a switch, transcoders, tone senders, POI interfaces.

Like the previous embodiments in Figures 2 and 3 the local MGW 43 may be seen as a resource used by the MSC server and the RNC server 41 for switching of local calls. The control logic for this switching is located in the RNC server 41 and the MSC server 18. The control logic in the MSC server and the RNC exchange control signals and decide the path which the user plane shall follow. Once the path has been decided either one of the MSC server and the RNC server signals an order to the local MGW 43 to reserve a port and a channel for the respective legs of a connection, that is for the respective user planes. One of the two user planes of a call extends between A and local MGW 43, and the other between B and local MGW 43. In the local MGW the two user planes are interconnected as is illustrated by the broad line referenced 7, 8.

Like in the previous embodiments a call may be redirected to the central MGW if end user invokes a service that is not supported in the base station aggregation site. In this case the MSC server will set up a new connection and tear down the old one which is no longer needed.

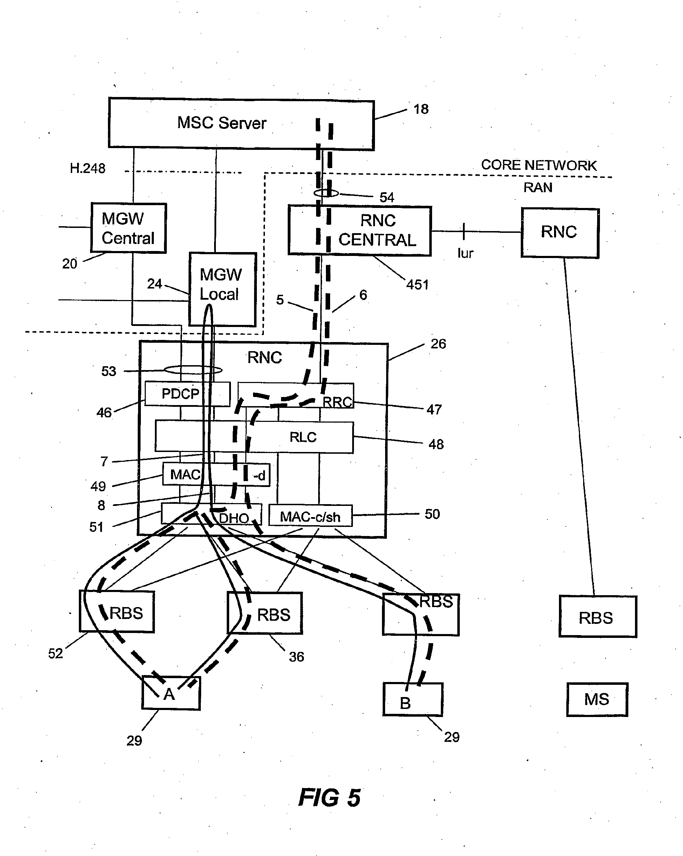

Fig. 5 shows in detail a protocol stack for use in a modification of the RBS aggregation site in Fig. 3. The node marked RNC central 451 is a central RNC serving a plurality of RNCs 26. In Fig. 5 mobiles A and B are served by different RBSs.

The protocol stack comprises a PDCP (packet data control plane) 46 and a RRC-plane 47 which both are terminated by a radio link control (RLC) plane 48. A MAC-d entity 49 handles dedicated transport channels, while a MAC-c/sh entity 50 handles the a paging channel (PCH), a forward access channel (FACH), a random access channel (RACH), a common packet channel (UL CPCH), a downlink shared channel (DSCH) and an uplink shared channel (USCH). A diversity handoff (DHO) protocol entity 51 handles soft handover.

As shown mobile A may be served by RBS 36 at one instant and at a later instant handoff is made to RBS 52. The legs 7, 8 of the CS connection are transported through the indicated protocol units

The two legs 7, 8 of the CS connection are transported over the lu_{CS} interface 53. The legs 5,6 of the signalling connection are transported over the control plane (CP) part of the lu_{CS} interface 54 which is the interface between the MSC server and the RNS 11.

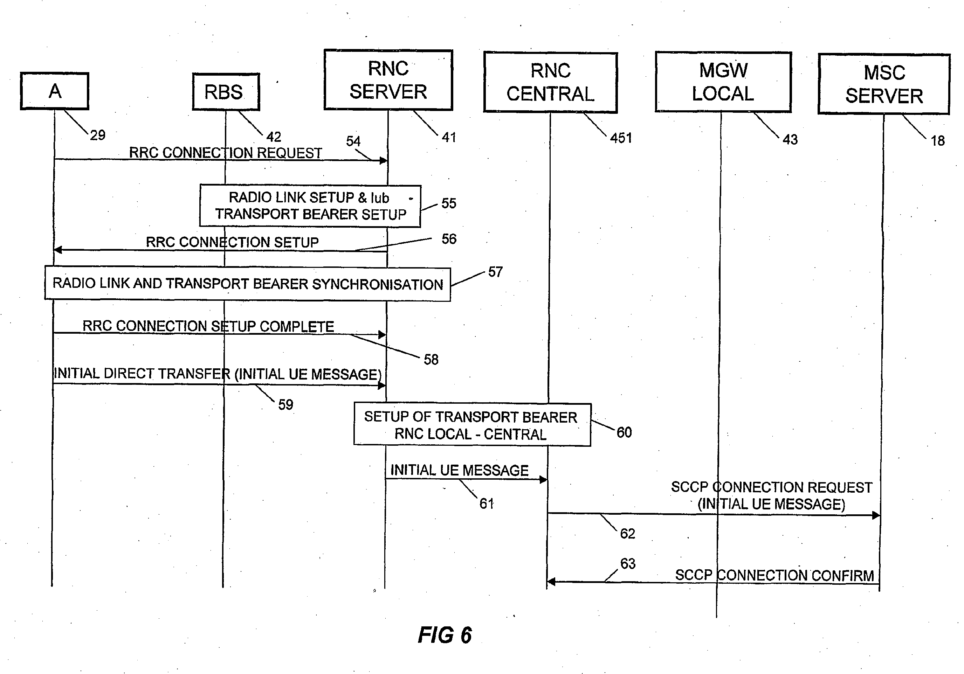

Fig. 6 is a signalling scheme illustrating control signalling for the establishing of a call originated by mobile station A. The user enters the digits to mobile station B and presses the "off hook" button on his mobile station A. A connection request is thereby sent to the local RNC server. In response the RNC server sets up a radio link and a l_{ub} transport bearer between RBS and RNC server as indicated by reference sign 55. Thereafter the RNC server sends a radio resource control (RRC) connection set-up request 56 to mobile station A. In response to this a radio link between RNC server and A is set up and bearer synchronization is established as is shown at 57. When this has been completed the mobile station ends an acknowledgment signal "RRC connection set-up complete" 58 to the RNC server and forwards an initial direct transfer message, also called initial UE message, 59 to the RNC server, this message transferring the entered B-number to the RNC server. The RNC server sets up a transport bearer between the central RNC and the local RNC server, arrow 60. When the bearer has been set up, the RNC server forwards the received initial UE message to the central RNC, arrow 61. In response to reception of the initial UE message the central RNC ends a SCCP connection request 62 to the MSC server, said connection containing the initial UE message. In response to reception of this message sends a SCCP connection confirm message 63 to the central RNC. Before this message is transmitted to the central RNC the MSC server analyses the B-number included in the initial UE message to make sure if it is associated with a mobile registered as being present in any of the RNSs 10-12. If so, it supplements, in accordance with the invention, the SCCP connection confirm message 63 with identity information on the RBS currenctly serving the B mobile.

The rest of the sequence follows normal procedures for establishing a call.

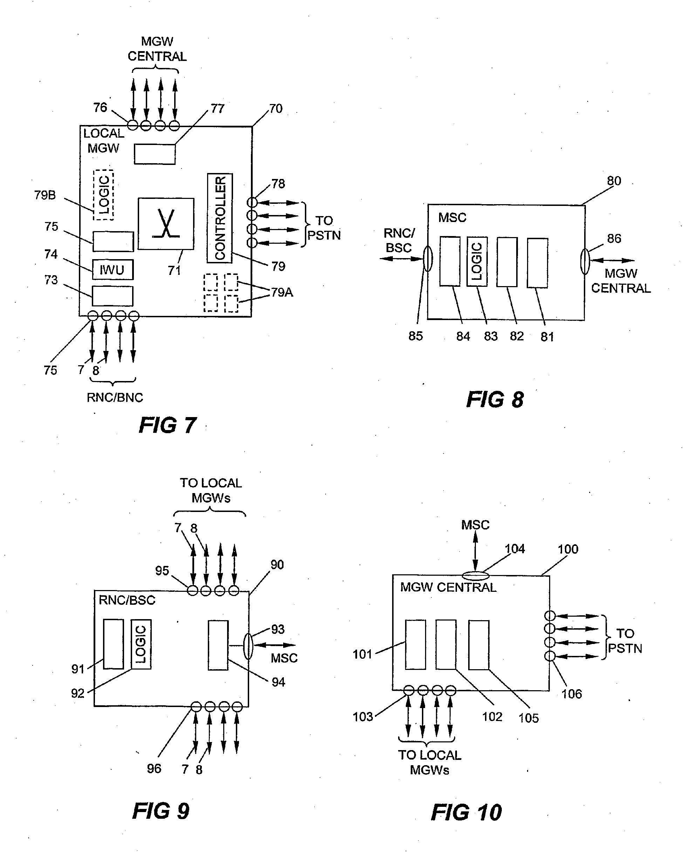

In Fig. 7 a schematic block schema of a typical local MGW 70 in accordance with the invention is illustrated. It should be understood that the block schema only illustrates the means which have bearing on the present invention. Among these means there is a switch 71, an interface 72 to an RNC or BSC, signaling means 73 for signaling to an RNC or BSC, an interworking unit 74 for handling circuit switched (CS) voice and data streams. The interface 72 comprises a plurality of ports for transport of voice and data streams on the user plane. The ports are marked by small circles. In two of the ports the two legs 7, 8 in the user plane have been indicated. Further there are call transfer means 75 for transfer of a call to the central MGW in case a call requires functionality not supported by the local MGW. There is also an interface 76 to the central MGW and signalling means 77. The local MGW has an point of interconnection with the PSTN, as symbolized by interface 78. Each interface 76 and 78 comprises a plurality of ports marked with small circles. The ports transport voice and data streams. Further there is a controller 79 orchestrating the processes executing in the local MGW. The controller may already be present in a conventional MGW.

In case a scalable local MGW is desired additional functionality is required, such as transcoders, tone senders, synchronization means, conference bridges, or combinations thereof, collectively represented by the small dashed rectangles 79A.

In case the local MGW is a RBS aggregation site 34 as shown in Fig. 3 it comprises logic 79B for set-up, release and tear down of calls, as shown by the dashed rectangle.

Fig. 8 illustrates an MSC 80 in accordance with the invention. In addition to a conventional MSC comprising conventional functionality, represented by rectangle 81, the MSC comprises means 82 for selecting which of the local MGWs that should be used for the local call. Typically means 82 are embodied by control logic that receives as input information cell identities of mobiles A and B, or a telephone number of a subscriber in the PSTN. As an example this functionality selects which of the many MGW-RNC pairs 32 that shall be used for a local call. The MSC also comprises control logic 83 for set-up, maintenance and release of calls. The control logic 83 interacts with control logic 79A in a local MGW. The MSC also has signalling means 84 for signalling with RNCs 26 or BSCs 25, 27 over an interface 85. In addidtion ther is an interface 86 for signalling with the central MGW 20 on the control plane.

Fig. 9 illustrates an RNC 90 or an BSC 90 in accordance with the invention. In addition to a conventional RNC or a conventional BSC comprising conventional functionality, represented by rectangle 91, the RNC or BNC in accordance with the invention comprises control logic 92 for set-up, maintenance and release of calls. Control logic 92 interacts with control logic in the MSC for these purposes. Further there is an interface 93 to the MSC for signalling on the control plane, said signalling using signalling means 94. In addition there is an interface 95 to local MGWs and an interface 96 to RBSs 35, 36. Each interface 95, 96 comprises ports, marked by circles, for transfer of voice and data streams on the user pane.

Fig. 10 illustrates a central MGW 100 in accordance with the invention. In addition to a conventional MGW comprising conventional functionality, represented by rectangle 101, the central MGW in accordance with the invention comprises call transfer means 102 to be used in case a call requires functionality not supported by a local MGW. An interface 103 to local MGWs comprises ports for voice and data streams on the user plane. Signalling to the MSC on the control plane takes place over an interface 104 and there are signalling means 105 for this. An interface 106 to PSTN comprises ports for transport of voice and data streams on the user plane.

### ABBREVATIONS

- 3GPP: 3^{rd} Generation Partnership Project
- AAL: Asynchronous transfer mode adaptation layer
- AMPS: Advanced mobile phone system
- ATM: Asynchronous transfer mode
- BSC: Base station controller
- BTS: Base transceiver station
- CC: Call control
- CS: Circuit service
- EDGE: Enhanced Data rates for Global Evolution
- FDD: Frequency division duplex
- GERAN: GSM/EDGE radio access network
- GGSN: Gateway GPRS Support Node
- GPRS: General packet radio system
- GSM: Global system for mobile communication
- IP: Internet protocol
- ISDN: Integrated services digital network
- MGW: Media gateway
- MSC: Mobile switching center
- PS: Packet service
- PDC: Pacific digital cellular
- PSTN: Public switched telephone network
- RAN: Radio access network
- RBS: Radio base station
- RNC: Radio network controller
- RTP: Real time transport protocol
- SGSN: Serving GPRS Support Node
- SMS: Short message service
- TDD: Time division duplex
- TDMA: Time division multiple access
- UDP: User datagram protocol
- UE: User equipment
- UMTS: Universal mobile telecommunications system
- UTRAN: Universal terrestrial radio access network
- VLR: Visitor location register
- WCDMA: Wide band code-division multiple access

## Claims

1. A telecommunication system comprising a core network (3) and a radio access network RAN (10, 11, 12) in communication with the core network, wherein the core network includes an MSC server (18) for generating control plane signaling and a central media gateway MGW (20) for transporting user plane data, wherein the system is **characterized in that**:
the core network also includes a local MGW (22; 23; 24; 34; 39, 43) geographically separated from the central MGW, the local MGW being associated with the RAN and including switch means (71) and control logic (92, 83) for setting up, maintaining, and releasing a local call between a calling mobile station and a called mobile station that are operating within the associated RAN, without routing the call to the central MGW; and
the MSC server (18) is adapted to instruct a controller in the RAN to route the local call to the local MGW.

2. The telecommunication system in accordance with claim 1, wherein the system includes a plurality of RANs in communication with the core network, and each RAN has an associated local MGW, and the MSC server (18) is further adapted to:
select one of the local MGWs to set up, maintain, and release the local call; and
transfer the called mobile station's number to the selected local MGW.

3. The telecommunication system in accordance with claim 1, wherein the local MGW is adapted to set up the local call by connecting call legs (7, 8) from the calling mobile station and the called mobile station, without routing the call to the central MGW.

4. The telecommunication system in accordance with claim 1, **characterized in that** said at least one local MGW (39, 43) is located in or co-located with a base station (38, 42).

5. The telecommunication system in accordance with claim 2, **characterized in** further comprising as a radio access gateway a base station controller BSC (25) in a GSM based RAN (10), a radio network controller RNC in a universal mobile telecommunication network UTRAN (11), a base station controller (BSC) in a GSM/EDGE radio access network GERAN (12) and any kind of 4G access points.

6. The telecommunication system in accordance with claim 3, **characterized in that** said at least one MGW is an RBS aggregation site (34) being provided with means (79B) for set up maintenance and tear-down of a call.

7. The telecommunication system in accordance with claim 1, **characterized in that** the local MGW (22, 23, 24) optionally is provided with an interworking unit (74) for handling circuit switched voice and data streams.

8. The telecommunication system in accordance with claim 1, **characterized in that** the local MGW (22, 23, 24; 34; 39, 43) optionally is provided with a PSTN interface (78).

9. The telecommunication system in accordance with claim 1, **characterized in that** the local MGW (23) further is provided with any of the following means (79A):
transcoders, tone senders, synchronization means, conference bridges, or combinations thereof, thereby providing a scalable local MGW.

10. The telecommunication system in accordance with claim 1, **characterized in that** the local MGW (22-24; 34; 39, 43) or the central MGW (20) or both is/are provided with call transfer means (75, 102) for transfer of a call to the central MGW in case a call requires functionality not supported by the local MGW.

11. The telecommunication system in accordance with claim 1, **characterized in that** the MSC server is provided with means (82) for selecting a local MGW among a plurality of local MGWs (32).

12. The telecommunication system in accordance with claim 9, **characterized in that** the central MGW is provided means (83) for set up maintenance and tear-down of a call.

13. A local media gateway MGW (22; 23; 24; 34; 39, 43) associated with a radio access network RAN (10, 11, 12) and in communication with an MSC server (18) and a central MGW (20), **characterized in that** the local MGW comprises:
communication means for receiving from the MSC server, a called mobile station's number;
control logic (92, 83) responsive to receiving the called mobile station's number for setting up, maintaining, and releasing a local call between a calling mobile station and the called mobile station when both mobile stations are operating within the associated RAN; and
call switching means (71) for connecting call legs (7, 8) from the calling mobile station and the called mobile station, without routing the call to the central MGW.

14. The local MGW in accordance with claim 13, wherein the local MGW is adapted to route a call to the central MGW (20) for handling when the called mobile station's number is not received from the MSC server.

15. The local MGW in accordance with claim 14 **characterized in that** it is provided with an interworking unit (74) for handling circuit switched voice and data streams.

16. The local MGW in accordance with claim 14 **characterized in that** it comprises any of the following means (79A): transcoders, tone senders, synchronization means, conference bridges, or combinations thereof, thereby providing a scalable local MGW.

17. An MSC server (18) in a core network (3) of a telecommunication system for generating control plane signaling with a central media gateway MGW (20) and a radio access network RAN (10, 11, 12), wherein the MSC server is adapted to:
determine that a calling mobile station and a called mobile station are both operating within the same RAN;
select a local MGW to set up, maintain, and release a call between the calling mobile station and the called mobile station as a local call in which the local MGW connects call legs (7, 8) from the calling mobile station and the called mobile station, without routing the call to the central MGW;
transfer the called mobile station's number to the selected local MGW, thereby triggering setup of the local call; and
instruct a controller in the RAN to route the local call to the selected local MGW.

18. The MSC server in accordance with claim 17 **characterized in that** it comprises control logic (83) for set-up and release of calls, said control logic controlling a MGW used as switch.

## Patentansprüche

1. Telekommunikationssystem, umfassend ein Kernnetz (3) und ein Funkzugangsnetz, RAN, (10, 11, 12) in Kommunikation mit dem Kernnetz, wobei das Kernnetz einen MSC-Server (18) zum Erzeugen von Steuerebenen-Signalisierung und ein zentrales Media Gateway, MGW, (20) zum Transportieren von Benutzerebenen-Daten umfasst, wobei das System **dadurch gekennzeichnet ist, dass**:
das Kernnetz außerdem ein lokales MGW (22; 23; 24; 34; 39, 43) umfasst, das vom zentralen MGW geografisch getrennt ist, wobei das lokale MGW mit dem RAN assoziiert ist und Vermittlungsmittel (71) und Steuerlogik (92, 83) zum Aufbauen, Aufrechterhalten und Freigeben einer lokalen Verbindung zwischen einer rufenden Mobilstation und einer gerufenen Mobilstation, die innerhalb des assoziierten RANs funktionieren, ohne Leiten der Verbindung zum zentralen MGW umfasst; und
der MSC-Server (18) so ausgelegt ist, dass er eine Steuerung im RAN anweist, die lokale Verbindung zum lokalen MGW zu leiten.

2. Telekommunikationssystem nach Anspruch 1, wobei das System eine Mehrzahl von RANs in Kommunikation mit dem Kernnetz umfasst, und jedes RAN ein assoziiertes lokales MGW aufweist, und der MSC-Server (18) ferner ausgelegt ist zum:
Auswählen eines der lokalen MGWs zum Aufbauen, Aufrechterhalten und Freigeben der lokalen Verbindung; und
Übertragen der Nummer der gerufenen Mobilstation an das ausgewählte MGW.

3. Telekommunikationssystem nach Anspruch 1, wobei das lokale MGW so ausgelegt ist, dass es die lokale Verbindung durch Verbinden von Verbindungsabschnitten (7, 8) von der rufenden Mobilstation und der gerufenen Mobilstation ohne Leiten der Verbindung zum zentralen MGW herstellt.

4. Telekommunikationssystem nach Anspruch 1, **dadurch gekennzeichnet, dass** das mindestens eine lokale MGW (39, 43) in oder ortsgleich mit einer Basisstation (38, 42) angeordnet ist.

5. Telekommunikationssystem nach Anspruch 2, **dadurch gekennzeichnet, dass** es ferner als ein Funkzugangs-Gateway eine Basisstationssteuerung, BSC, (25) in einem GSM-basierten RAN (10), eine Funknetzsteuerung, RNC, in einem universellen Mobilfunk-Telekommunikationsnetz, UTRAN, (11), eine Basisstationssteuerung (BSC) in einem GSM/EDGE-Funkzugangsnetz, GERAN, (12) und eine beliebige Art von 4G-Zugangspunkten umfasst.

6. Telekommunikationssystem nach Anspruch 3, **dadurch gekennzeichnet, dass** das mindestens eine MGW eine RBS-Aggregationsstelle (34) ist, die mit Mitteln (79B) zum Aufbauen, Aufrechterhalten und Abbauen einer Verbindung versehen ist.

7. Telekommunikationssystem nach Anspruch 1, **dadurch gekennzeichnet, dass** das lokale MGW (22, 23, 24) optional mit einer Anpassungseinheit (74) zum Verarbeiten von leitungsvermittelten Sprach- und Datenströmen versehen ist.

8. Telekommunikationssystem nach Anspruch 1, **dadurch gekennzeichnet, dass** das lokale MGW (22, 23, 24; 34; 39, 43) optional mit einer PSTN-Schnittstelle (78) versehen ist.

9. Telekommunikationssystem nach Anspruch 1, **dadurch gekennzeichnet, dass** das lokale MGW (23) ferner mit einem von den folgenden Mitteln (79A) versehen ist:
Transcodern, Tonsendern, Synchronisationsmitteln, Konferenzbrücken oder Kombinationen davon, um dadurch ein skalierbares lokales MGW bereitzustellen.

10. Telekommunikationssystem nach Anspruch 1, **dadurch gekennzeichnet, dass** das lokale MGW (22 - 24; 34; 39, 43) oder das zentrale MGW (20) oder beide mit Verbindungsumlegungsmitteln (75, 102) zum Umlegen einer Verbindung zum zentralen MGW versehen ist/sind, falls eine Verbindung Funktionalität erfordert, die vom lokalen MGW nicht unterstützt wird.

11. Telekommunikationssystem nach Anspruch 1, **dadurch gekennzeichnet, dass** der MSC-Server mit Mitteln (82) zum Auswählen eines lokalen MGWs unter einer Mehrzahl von lokalen MGWs (32) versehen ist.

12. Telekommunikationssystem nach Anspruch 9, **dadurch gekennzeichnet, dass** das zentrale MGW mit Mitteln (83) zum Aufbauen, Aufrechterhalten und Abbauen einer Verbindung versehen ist.

13. Lokales Media Gateway, MGW, (22; 23; 24; 34; 39, 43), das mit einem Funkzugangsnetz, RAN, (10, 11, 12) assoziiert und mit einem MSC-Server (18) und einem zentralen MGW (20) in Kommunikation ist, **dadurch gekennzeichnet, dass** das lokale MGW umfasst:
Kommunikationsmittel zum Empfangen einer Nummer einer gerufenen Mobilstation vom MSC-Server;
Steuerlogik (92, 83) zum Aufbauen, Aufrechterhalten und Freigeben einer lokalen Verbindung zwischen einer rufenden Mobilstation und der gerufenen Mobilstation, wenn beide Mobilstationen innerhalb des assoziierten RANs funktionieren, als Reaktion auf den Empfang der Nummer der gerufenen Mobilstation; und
Verbindungsvermittlungsmittel (71) zum Verbinden von Verbindungsabschnitten (7, 8) von der rufenden Mobilstation und der gerufenen Mobilstation ohne Leiten der Verbindung zum zentralen MGW.

14. Lokales MGW nach Anspruch 13, wobei das lokale MGW so ausgelegt ist, dass es eine Verbindung zum zentralen MGW (20) zum Abwickeln leitet, wenn die Nummer der gerufenen Mobilstation vom MSC-Server nicht empfangen wird.

15. Lokales MGW nach Anspruch 14, **dadurch gekennzeichnet, dass** es mit einer Anpassungseinheit (74) zum Verarbeiten von leitungsvermittelten Sprach- und Datenströmen versehen ist.

16. Lokales MGW nach Anspruch 14, **dadurch gekennzeichnet, dass** es eines von den folgenden Mitteln (79A) umfasst:
Transcodern, Tonsendern, Synchronisationsmitteln, Konferenzbrücken oder Kombinationen davon, um dadurch ein skalierbares lokales MGW bereitzustellen.

17. MSC-Server (18) in einem Kernnetz (3) eines Telekommunikationssystems zum Erzeugen von Steuerebenen-Signalisierung mit einem zentralen Media Gateway, MGW, (20) und einem Funkzugangsnetz, RAN, (10, 11, 12), wobei der MSC Server ausgelegt ist zum:
Bestimmen, dass eine rufende Mobilstation und eine gerufene Mobilstation beide innerhalb des gleichen RANs funktionieren;
Auswählen eines lokalen MGWs zum Aufbauen, Aufrechterhalten und Freigeben einer Verbindung zwischen der rufenden Mobilstation und der gerufenen Mobilstation als eine lokale Verbindung, in welcher das lokale MGW Verbindungsabschnitte (7, 8) von der rufenden Mobilstation und der gerufenen Mobilstation ohne Leiten der Verbindung zum zentralen MGW verbindet;
Übertragen der Nummer der gerufenen Mobilstation an das ausgewählte lokale MGW, um dadurch den Aufbau der lokalen Verbindung auszulösen; und
Anweisen einer Steuerung im RAN, die lokale Verbindung zum ausgewählten MGW zu leiten.

18. MSC-Server nach Anspruch 17, **dadurch gekennzeichnet, dass** er Steuerlogik (83) zum Aufbauen und Freigeben von Verbindungen umfasst, wobei die Steuerlogik ein MGW steuert, das als eine Vermittlungsanlage verwendet wird.

## Revendications

1. Système de télécommunication comprenant un réseau central (3) et un réseau d'accès radio (10, 11, 12) qui communique avec le réseau central, le réseau central comprenant un serveur MSC (18) destiné à produire la signalisation du plan de commande et une passerelle multimédia centrale, MGW pour « *Media Gateway* », (20) destinée à transporter des données du plan utilisateur, le système étant **caractérisé en ce que** :
le réseau central comprend également une passerelle MGW locale (22 ; 23 ; 24 ; 34 ; 39, 43) géographiquement séparée de la passerelle MGW centrale, la passerelle MGW locale étant associée au réseau d'accès radio et comprenant un moyen de commutation (71) et une logique de commande (92, 83) afin d'établir, de maintenir et de libérer un appel local entre une station mobile appelante et une station mobile appelée qui fonctionnent au sein du réseau d'accès radio associé, sans router l'appel via la passerelle MGW centrale ; et
le serveur MSC (18) est conçu pour ordonner à un contrôleur du réseau d'accès radio de router l'appel local vers la passerelle MGW locale.

2. Système de télécommunication selon la revendication 1, le système comprenant une pluralité de réseaux d'accès radio qui communiquent avec le réseau central et chaque réseau d'accès radio est associé à une passerelle MGW locale et dans lequel le serveur MSC (18) est en outre conçu pour :
sélectionner l'une des passerelles MGW locales pour l'établissement, la maintenance et la libération de l'appel local ; et
transférer le numéro de la station mobile appelée à la passerelle MGW locale sélectionnée.

3. Système de télécommunication selon la revendication 1, dans lequel la passerelle MGW locale est conçue pour établir l'appel local en connectant les branches de l'appel (7, 8) entre la station mobile appelante et la station mobile appelée sans router l'appel vers la passerelle MGW centrale.

4. Système de télécommunication selon la revendication 1, **caractérisé en ce que** ladite au moins une passerelle MGW locale (39, 43) est située dans une station de base (38, 41) ou implantée à côté de celle-ci.

5. Système de télécommunication selon la revendication 2, **caractérisé en ce qu'**il comprend en outre comme passerelle d'accès radio un contrôleur de station de base, BSC pour « Base *Station Controller* », (25) dans un réseau d'accès radio de type GSM (10), un contrôleur de réseau radio, RNC pour « *Radio Network Controller* » dans un réseau de télécommunication mobile universel, UTRAN pour « *Universal Mobile Telecommunication Network* », (11), un contrôleur de station de base, BSC, dans un réseau d'accès radio GSM/EDGE, GERAN pour « *GPRS*/*EDGE Radio Access Network* », (12) et un type quelconque de point d'accès 4G.

6. Système de télécommunication selon la revendication 3, **caractérisé en ce que** ladite au moins une passerelle MGW est un site d'agrégation RBS (34) qui possède un moyen (79B) pour l'établissement, la maintenance et la terminaison d'un appel.

7. Système de télécommunication selon la revendication 1, **caractérisé en ce que** la passerelle MGW locale (22, 23, 24) est dotée en option d'une unité d'interfonctionnement (74) destinée à gérer les flux de données et de voix à commutation de circuits.

8. Système de télécommunication selon la revendication 1, **caractérisé en ce que** la passerelle MGW locale (22, 23, 24 ; 34 ; 39, 43) est dotée en option d'une interface RTPC (78).

9. Système de télécommunication selon la revendication 1, **caractérisé en ce que** la passerelle MGW locale (23) est en outre dotée de l'un quelconque des moyens suivants (79A) :
transcodeurs, émetteurs de tonalités, moyens de synchronisation, passerelles de conférence ou des combinaisons de ceux-ci, ce qui fournit une passerelle MGW locale extensible.

10. Système de télécommunication selon la revendication 1, **caractérisé en ce que** la passerelle MGW locale (22 à 24 ; 34 ; 39, 43) ou la passerelle MGW centrale (20), ou chacune d'entre elles, est dotée d'un moyen de transfert de cellule (75, 102) afin de transférer un appel à la passerelle MGW centrale si l'appel nécessite des fonctionnalités qui ne sont pas supportées par la passerelle MGW locale.

11. Système de télécommunication selon la revendication 1, **caractérisé en ce que** le serveur MSC est doté d'un moyen (82) destiné à sélectionner une passerelle MGW locale parmi une pluralité de passerelles MGW locales (32).

12. Système de télécommunication selon la revendication 9, **caractérisé en ce que** la passerelle MGW centrale est dotée d'un moyen (83) destiné à établir, maintenir et terminer un appel.

13. Passerelle multimédia locale, MGW pour « Media Gateway », (22 ; 23 ; 24 ; 34 ; 39, 43) associée à un réseau d'accès radio (10, 11, 12) et communiquant avec un serveur MSC (18) et une passerelle MGW centrale (20), la passerelle MGW locale étant **caractérisée en ce qu'**elle comprend :
un moyen de communication destiné à recevoir du serveur MSC un numéro de la station mobile appelée ;
une logique de commande (92, 83) qui répond à la réception du numéro de la station mobile appelée en établissant, en maintenant et en libérant un appel local entre une station mobile appelante et la station mobile appelée lorsque les deux stations mobiles fonctionnent au sein du réseau d'accès radio associé ; et
un moyen de commutation d'appel (71) destiné à connecter les branches de l'appel (7, 8) entre la station mobile appelante et la station mobile appelée, sans router l'appel vers la passerelle MGW centrale.

14. Passerelle MGW locale selon la revendication 13, la passerelle MGW locale étant conçue pour router un appel vers la passerelle MGW centrale (20) pour qu'il y soit géré, lorsque le numéro de la station mobile appelée n'est pas reçu en provenance du serveur MSC.

15. Passerelle MGW locale selon la revendication 14, **caractérisée en ce qu'**elle est dotée d'une unité d'interfonctionnement (74) destinée à gérer les flux de données et de voix à commutation de circuits.

16. Passerelle MGW locale selon la revendication 14, **caractérisée en ce qu'**elle est dotée de l'un quelconque des moyens suivants (79A) : transcodeurs, émetteurs de tonalités, moyens de synchronisation, passerelles de conférence ou des combinaisons de ceux-ci, ce qui fournit une passerelle MGW locale extensible.

17. Serveur MSC (18) sur un réseau central (3) d'un système de télécommunication, destiné à gérer la signalisation du plan de commande avec une passerelle MGW centrale (20) et un réseau d'accès radio (10, 11, 12), le serveur MSC étant conçu pour :
déterminer qu'une station mobile appelante et une station mobile appelée fonctionnent toutes deux au sein du même réseau d'accès radio ;
sélectionner une passerelle MGW locale pour établir, maintenir et libérer un appel entre la station mobile appelante et la station mobile appelée sous la forme d'un appel local, la passerelle MGW locale connectant les branches de l'appel (7, 8) entre la station mobile appelante et la station mobile appelée sans router l'appel vers la passerelle MGW centrale ;
transférer le numéro de la station mobile appelée à la passerelle MGW locale, ce qui déclenche l'établissement de l'appel local ; et
ordonner à un contrôleur du réseau d'accès radio de router l'appel local vers la passerelle MGW locale sélectionnée.

18. Serveur MSC selon la revendication 17, **caractérisé en ce qu'**il comprend une logique de commande (83) pour l'établissement et la libération d'appels, ladite logique de commande commandant une passerelle MGW utilisée comme commutateur.
